# FASCICULE DE BREVET EUROPEEN

(11) **EP 3 414 985 B1**
(45) Date de publication et mention de la délivrance du brevet: **11.08.2021**
(21) Numéro de dépôt: 18176787.2
(22) Date de dépôt: 08.06.2018
(51) Int. Cl.: A01D 34/28, A01D 43/063, A01D 43/077, A01D 57/02

(54) **MACHINE AGRICOLE DE SUPPRESSION D'ÉPIS PARASITES DES CULTURES AGRICOLES**
LANDWIRTSCHAFTLICHE MASCHINE ZUR BESEITIGUNG VON PARASITÄREN ÄHREN IN PFLANZENKULTUREN
AGRICULTURAL MACHINE FOR ELIMINATION OF PARASITE EARS FROM AGRICULTURAL CROPS

(30) Priorité: 13.06.2017 FR 1755265
(43) Date de publication de la demande: 19.12.2018
(73) Titulaire: Bouillé, Romain, 77440 Jaignes (FR)
(72) Inventeur: Bouillé, Romain, 77440 Jaignes (FR)
(74) Mandataire: Bringer, Mathieu

(56) Documents cités:
- EP-A1- 3 090 617
- WO-A1-98/08373
- DE-A1- 1 482 923
- GB-A- 2 153 197
- US-A- 4 679 386

## Description

### 1. Domaine technique de l'invention

L'invention concerne une machine agricole de suppression d'épis parasites des cultures agricoles.

### 2. Arrière-plan technologique

Il est fréquent que les agriculteurs constatent que des plantes parasites poussent au milieu des champs cultivés. Ces plantes parasites peuvent être nocives pour les plantes cultivées et/ou entraver le bon développement des cultures en place.

Aussi, différentes solutions ont été proposées pour lutter contre le développement des mauvaises herbes au sein des parcelles cultivées.

L'une des solutions couramment mise en œuvre pour lutter contre ces plantes parasites consistent à pulvériser des herbicides sélectifs.

Cette solution chimique rencontre de plus en plus d'obstacles réglementaires liés notamment à la volonté de réduire les interventions chimiques dans les cultures destinées à être consommées. En outre, la solution chimique n'est pas toujours compatible avec les impératifs d'une agriculture biologique.

En outre, certaines mauvaises herbes, telles que le vulpin ont tendance à résister aux herbicides sélectifs. C'est d'ailleurs l'utilisation récurrente des produits chimiques qui modifient le comportement des plantes parasites en les rendant résistantes aux herbicides.

D'autres méthodes ont alors été proposées qui consistent à modifier génétiquement la plante cultivée pour pouvoir la traiter par des désherbants non sélectifs. Cette solution est encore moins compatible avec la volonté de disposer d'une agriculture biologique respectueuse de l'environnement et limitant au maximum la pollution des sols. En outre, un certain nombre de pays ont pris des mesures pour interdire l'utilisation des organismes génétiquement modifiés.

Il a également été proposé, pour le traitement des champs aux dimensions réduites, d'utiliser des bineuses, qui permettent de couper les épis parasites.

Cette solution est longue, éreintante et peu compatible avec les champs de grandes dimensions. En outre, cette solution nécessite que les plantes cultivées soient agencées en rangs espacés les uns des autres d'au moins 20 à 25cm, ce qui n'est pas le cas des champs de céréales notamment. Cette solution ne se prête pas non plus aux sols caillouteux.

Il a aussi été proposé d'utiliser des faucheuses pour couper les épis parasites.

Cette solution permet de couper de la végétation abondante sans distinction de la hauteur des récoltes. Aussi, cette solution se prête mal à la suppression spécifiques des épis parasites.

Il existe donc un besoin de disposer d'une nouvelle solution permettant de lutter contre les épis parasites au sein d'une culture.

Les documents GB 2 153 197 A, WO 98/08373 A1 et DE 14 82 923 A1 décrivent différentes machines de récolte de type faucheuse avec un mécanisme faucher ou ramasseur.

### 3. Objectifs de l'invention

L'invention vise donc à fournir une machine agricole de suppression des épis parasites qui dépassent des champs cultivés.

L'invention vise en particulier à fournir une machine agricole qui permet d'écimer les épis parasites sans nuire à la culture en place.

L'invention vise aussi à fournir une machine agricole capable de traiter rapidement de grandes parcelles sans recourir à des produits chimiques.

L'invention vise également à fournir, dans au moins un mode de réalisation, une machine agricole respectueuse de l'environnement et compatible avec les contraintes de l'agriculture biologique.

L'invention vise aussi à fournir, dans au moins un mode de réalisation, une machine agricole qui peut évoluer sur tous types de sols.

L'invention vise aussi à fournir, dans au moins un mode de réalisation, une machine agricole qui peut traiter tous types de plantes parasites et tous types de cultures.

### 4. Exposé de l'invention

Pour ce faire, l'invention concerne une machine agricole de suppression d'épis parasites qui dépassent verticalement d'une espèce végétale cultivée sur une surface de culture comprenant :
- un châssis et des organes de déplacement du châssis dans un sens d'avancement et selon une direction principale d'avancement, dite direction longitudinale, lesdits organes de déplacement présentant des zones de contact avec la surface de culture,
- des outils de coupe s'étendant selon une direction perpendiculaire à la direction longitudinale, dite direction transversale, et montés sur un cadre réglable en hauteur par rapport audit châssis de manière à pouvoir positionner les outils de coupe au niveau des épis parasites à couper,
- une benne de récupération des épis coupés par lesdits outils de coupe, ladite benne de récupération étant reliée audit châssis,
- des moyens de convoyage des épis coupés portés par ledit cadre réglable en hauteur et s'étendant entre les outils de coupe et ladite benne de récupération des épis coupés, lesdits moyens de convoyage comprenant :
   ∘ une pluralité de tapis de convoyage s'étendant le long de la direction transversale, en arrière des outils de coupe dans le sens d'avancement de la machine,
   ∘ un tapis de remplissage s'étendant le long de la direction longitudinale entre les tapis de convoyage et ladite benne de récupération et formant un axe de symétrie de ladite machine,
   ∘ des moteurs d'entrainement en rotation desdits tapis de convoyage et dudit tapis de remplissage.

Une machine selon l'invention est caractérisée en ce que ledit cadre réglable en hauteur est monté sur une articulation configurée pour pouvoir rabattre ledit cadre de part et d'autre dudit axe de symétrie formé par ledit tapis de remplissage, le long de la direction longitudinale, de manière à pouvoir limiter l'encombrement transversal de la machine lors de déplacements sur des routes ouvertes à la circulation.

Une machine agricole selon l'invention permet donc de traiter et de supprimer les épis parasites qui dépassent d'une culture sans recourir à des produits chimiques. La machine agricole selon l'invention forme une écimeuse-récolteuse en permettant à la fois d'écimer les épis parasites qui dépassent verticalement d'une espèce végétale cultivée sur une surface de culture, et de récolter les épis écimés par le biais des moyens de convoyage et de la benne de récupération des épis. Une machine selon l'invention permet donc d'écimer les épis parasites sans nuire à la culture en place. En outre, la machine selon l'invention, par la mise en œuvre uniquement de moyens mécaniques, et éventuellement hydrauliques et/ou électriques, est respectueuse de l'environnement et compatible avec les contraintes de l'agriculture biologique. De plus, avec une machine selon l'invention, aucune graine sectionnée ne reste sur la parcelle traitée. L'ensemble des épis coupés par les outils de coupe est véhiculé vers la benne de récupération.

Ces avantages sont rendus possible par la présence de moyens de convoyage et d'outils de coupe portés par un cadre réglable en hauteur, c'est à dire un cadre monté mobile selon la direction verticale, qui peut être amené au niveau des épis à couper. Les moyens de convoyage étant également portés par le cadre réglable en hauteur, ils suivent les outils de coupe et permettent de récupérer les épis coupés au voisinage de la zone de coupe. Les moyens de convoyage s'étendent entre les outils de coupe et la benne de récupération de manière à pouvoir véhicules les épis coupés par les outils de coupe jusqu'à la benne de récupération.

L'ensemble des organes de la machine (outils de coupe, moyens de convoyage, benne de récupération) est solidaire, directement ou indirectement, du châssis du véhicule de sorte que lors du déplacement du véhicule sur la surface de culture, l'ensemble des organes suit le mouvement du châssis. Dès lors, au cours du déplacement de la machine sur la surface de culture, les épis parasites peuvent être écimés et récupérés dans la benne de récupération. Une machine selon l'invention peut donc traiter une parcelle de grande dimension. La seule contrainte réside dans la contenance de la benne de récupération, qu'il faut vider dès qu'elle est remplie.

Les tapis de convoyage sont agencés en arrière des outils de coupe de manière à pouvoir récupérer les épis coupés lors de l'avancement de la machine. Ces tapis de convoyage véhiculent les épis jusqu'à un tapis de remplissage qui est agencé perpendiculairement au tapis de convoyage. En pratique, l'extrémité des tapis de convoyage débouche sur une extrémité du tapis de remplissage de sorte que les épis tombent par gravité sur le tapis de remplissage. Ce tapis de remplissage est agencé entre les tapis de convoyage et la benne de récupération pour véhiculer les épis vers la benne. Cette réalisation des moyens de convoyage en des tapis de convoyage qui s'étendent le long de la direction transversale et en un tapis de remplissage qui s'étend le long de la direction longitudinale, c'est à dire dans le sens de déplacement de la machine agricole, permet d'agencer la benne de récupération à l'arrière ou à l'avant de la machine agricole, ce qui facile son déplacement.

Une machine selon l'invention comprend une pluralité de tapis de convoyage qui s'étendent de part et d'autre du tapis de remplissage, qui est un tapis central. Ainsi, lors du déplacement de la machine agricole, les épis coupés à droite de la machine sont véhiculés vers le tapis de remplissage central par les tapis de droite et les épis coupés à gauche de la machine sont véhiculés vers la tapis de remplissage central par les tapis de gauche. Dans le cas où les tapis de convoyage de droite et de gauche sont mis en rotation par des moteurs, les moteurs de droite et de gauche tournent dans des sens inverse de rotation.

Une machine selon l'invention permet en outre d'adapter l'encombrement transversal de la machine lors des déplacements de la machine sur des routes ouvertes à la circulation. La machine peut donc être utilisée pour le traitement d'une première parcelle, et ensuite être véhiculée par le réseau routier vers une autre parcelle, une fois le cadre rabattu de part et d'autre de la machine. Bien évidemment, dans la position repliée, la machine n'est plus en configuration de supprimer les épis parasites.

Une machine selon l'invention est particulièrement destinée à supprimer les épis ou herbes parasites qui dépassent des champs cultivés. Cela étant, l'architecture de la machine permet aussi de l'utiliser lors d'opérations de récolte de parcelles semées de plusieurs cultures, en permettant de récolter la culture la plus haute, sans toucher aux cultures plus basses. La machine peut également être utilisée pour écimer les tiges les plus hautes d'une culture de manière à favoriser le tallage.

Avantageusement, une machine selon l'invention comprend en outre des moyens de rabattage des épis vers les outils de coupe, ces moyens de rabattage étant montés sur le cadre réglable en hauteur en étant mobile en rotation autour d'un axe s'étendant le long de la direction transversale.

Une machine selon cette variante avantageuse permet de faciliter la coupe des épis et la récolte des épis coupés en prévoyant des moyens de rabattage des épis vers les outils de coupe. Ces moyens de rabattage sont montés mobile en rotation pour pouvoir guider et accompagner les épis vers les outils de coupe, puis de guider et d'accompagner les épis coupés vers les moyens de convoyage.

Avantageusement et selon cette variante, les moyens de rabattage comprennent en outre des brosses hélicoïdales s'étendant le long de la direction transversale et des moteurs d'entrainement en rotation desdits brosses hélicoïdales.

Ces brosses hélicoïdales permettent d'amener les épis parasites contre les outils de coupe. En outre, ces brosses hélicoïdales permettent de délimiter, lorsqu'elles sont mises en rotation, une enceinte de confinement des épis coupés facilitant leur guidage vers les moyens de convoyage. En outre, les brosses, qui sont par exemple formées de poils de 10 à 25 cm de long, sont légères et n'impactent donc pas significativement le poids du cadre réglable en hauteur. Cette structure des brosses permet également de faciliter leur mise en rotation par des moteurs de puissance réduite.

Selon l'invention, les outils de coupe sont des scies double lames entrainées dans un mouvement de va et vient le long de la direction transversale par des moteurs hydrauliques.

Des scies double lames permettent d'écimer les épis sans abimer la culture en place. En particulier, les scies double lames ne génèrent aucun mouvement d'air lors de leur mise en action, ce qui évite donc de perturber la hauteur des épis ou mauvaises herbes à couper.

Avantageusement et selon l'invention, le cadre réglable en hauteur comprend :
- un mécanisme articulé formant un parallélogramme, relié audit châssis et comprenant au moins un vérin commandé adapté pour pouvoir modifier la géométrie dudit parallélogramme,
- un support plan porté par ledit parallélogramme de sorte qu'une déformation du parallélogramme par actionnement dudit vérin commandé assure un déplacement vertical du support plan tout en le maintenant horizontal, ledit support plan portant lesdits outils de coupe et lesdits tapis de convoyage.

Une machine selon cette variante permet de manière simple de déplacer verticalement le cadre réglable en hauteur de manière à pouvoir amener les outils de coupe et les tapis de convoyage au niveau des épis à couper. La commande du vérin modifier la géométrie de l'articulation formant un parallélogramme et donc la hauteur du support plan portant les outils de coupe et les tapis de convoyage.

Avantageusement et selon l'invention, lesdits outils de coupe s'étendent le long de ladite direction longitudinale sur une distance de 12 à 20 mètres.

Une machine selon cette variante permet de traiter des champs de grande dimension en un minimum de temps.

Avantageusement, une machine selon l'invention comprend une cabine de pilotage desdits organes de déplacement dudit châssis et des moyens de commande de la hauteur du cadre agencés dans ladite cabine de pilotage.

Avantageusement et selon l'invention, la benne de récupération des épis coupés présente une contenance de l'ordre de 4 à 5 m3.

L'invention concerne également une machine agricole caractérisée en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique de face d'une machine agricole selon un mode de réalisation de l'invention,
- la figure 2 est une vue schématique de dessus d'une machine agricole selon un mode de réalisation de l'invention,
- la figure 3 est une vue schématique de côté d'une machine agricole selon un mode de réalisation de l'invention,
- la figure 4 est une vue schématique en perspective d'une machine agricole selon un mode de réalisation de l'invention,
- la figure 5 est une vue schématique en perspective d'une machine agricole selon un mode de réalisation de l'invention dans une position repliée permettant un déplacement de la machine sur une route ouverte à la circulation.

### 6. Description détaillée d'un mode de réalisation de l'invention

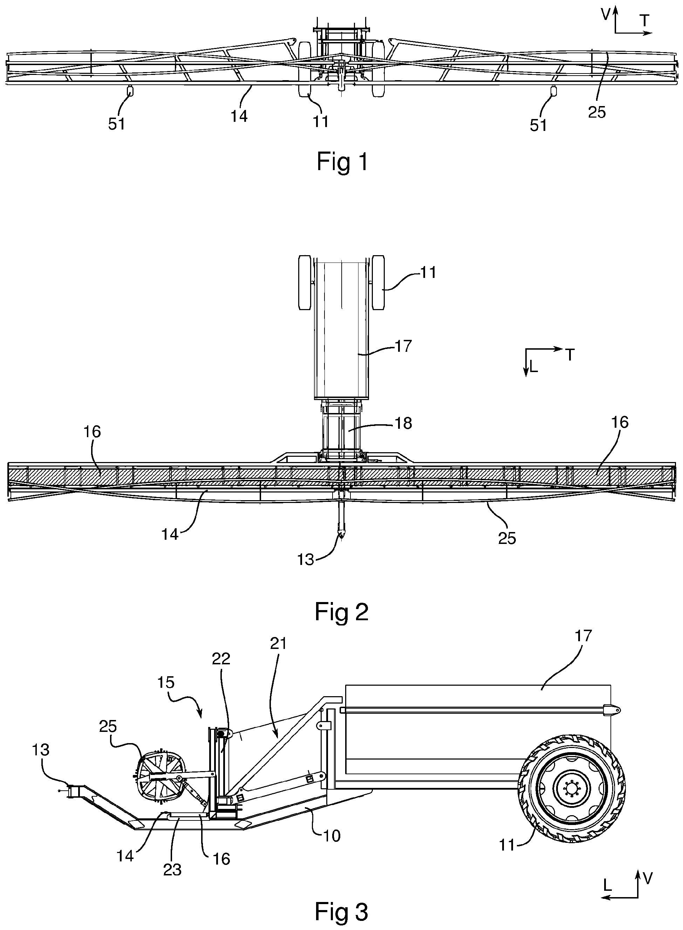

Sur les figure, les échelles et les proportions ne sont pas strictement respectées et ce, à des fins d'illustration et de clarté. Dans toute la description détaillée qui suit en référence aux figures, sauf indication contraire, chaque élément de la machine est décrit tel qu'il est agencé lorsque la machine est en situation de traiter des épis parasites. Cet agencement est représenté sur les figures 1 à 4.

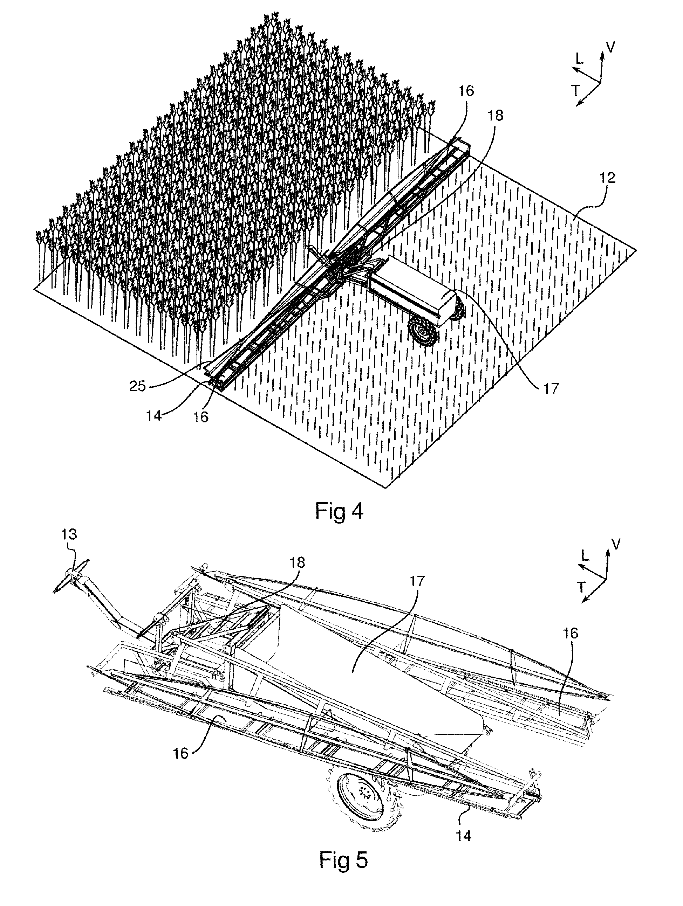

En outre, les éléments identiques, similaires ou analogues sont désignés par les mêmes références dans toutes les figures. Enfin, les termes longitudinal, transversal et vertical sont utilisés à titre non limitatif en référence au trièdre L, T, V tel que représenté sur la figure 4. La direction longitudinale correspond à la direction principale d'avancement de la machine. La direction verticale est la direction définie par la gravité. La direction transversale est la direction perpendiculaire à la direction longitudinale et à la direction verticale. C'est la direction dans laquelle s'étendent les outils de coupe et les tapis de convoyage.

Sur les figures, les échelles et les proportions ne sont pas strictement respectées et ce, à des fins d'illustration et de clarté.

Une machine agricole selon l'invention est destinée à supprimer les épis parasites qui dépassent verticalement d'une espèce végétale cultivée sur une surface de culture. Une machine agricole selon l'invention forme une écimeuse-récolteuse qui comprend un châssis 10 et des roues 11 qui font office d'organes de déplacement du châssis 10 sur une surface de culture 12.

Selon le mode de réalisation des figures, la machine agricole comprend en outre des moyens d'accrochage 13 de la machine à un véhicule destiné à pouvoir tracter la machine. Ce véhicule tracteur n'est pas représenté sur les figures à des fins de clarté. Les moyens d'accrochage 13 de la machine à un véhicule tracteur sont par exemple formés par des moyens de remorquage comprenant une tête d'attelage solidarisée à la machine agricole selon l'invention et une boule d'attelage solidarisée au véhicule tracteur. Bien entendu, d'autres moyens d'accrochage peuvent être prévus pour relier la machine selon l'invention à un véhicule tracteur.

Selon un autre mode de réalisation non représenté sur les figures, la machine agricole est automotrice.

Une machine selon l'invention comprend également des outils de coupe 14 qui s'étendent selon la direction transversale.

Ces outils de coupe 14 sont de préférence des scies double lames entrainées dans un mouvement de va et vient transversal par des moteurs, non représentés sur les figures à des fins de clarté. Ces moteurs sont de préférence des moteurs hydrauliques. Les scies double lames sont formées de deux scies plates horizontales comprenant chacune une pluralité de dents tranchantes. Les scies sont superposées l'une à l'autre et sont mobiles l'une par rapport à l'autre dans un mouvement de va et vient transversal. Ce mouvement de va et vient transversal assure la coupe des épis parasites.

Les outils de coupe 14 s'étendent de préférence sur une longueur de 12 à 20 mètres de manière à ce que la machine présente une envergure permettant de traiter une surface de culture importante en un minimum de temps. A titre d'exemple, une machine selon le mode de réalisation des figures permet d'atteindre un rendement de l'ordre de 9 à 18 hectares de l'heure pour une vitesse d'avancement de 5 à 10 km/h.

Ces outils de coupe 14 sont montés sur un cadre 15 qui est réglable en hauteur par rapport au châssis 10 et donc à la surface de culture 12 de manière à pouvoir positionner les outils de coupe 14 au niveau des épis parasites à couper. Le réglage en hauteur du cadre 15 est décrit dans la suite.

Le cadre 15 porte également des moyens de convoyage des épis coupés vers une benne 17 de récupération des épis coupés. Ces moyens de convoyage comprennent des tapis de convoyage 16 qui s'étendent le long de la direction transversale, en arrière des outils de coupe 14 et un tapis de remplissage 18 qui s'étend le long de la direction longitudinale, perpendiculairement aux tapis de convoyage 16, entre les tapis de convoyage 16 et la benne 17 de récupération. Le tapis de convoyage 16 et le tapis de remplissage 18 sont entrainés en rotation par des moteurs, non représentés sur les figures à des fins de clarté. Ces moteurs sont de préférence des moteurs hydrauliques. Les outils de coupe 14 sont agencés au niveau des bords latéraux des tapis de convoyage 16. Aussi, tout épi coupé par les outils de coupe atterrit naturellement sur les tapis de convoyage 16 du fait du déplacement de la machine dans le sens d'avancement longitudinal de la machine.

Ainsi, selon l'invention, les tapis de convoyage 16 et les outils de coupe 14 sont configurés pour pouvoir être positionnés au niveau des épis parasites à couper par le déplacement du cadre 15 réglable en hauteur. La mise en route des scies double lames assurent l'écimage des épis parasites. Ces épis, une fois coupés, sont véhiculés par les tapis de convoyage 16 vers le tapis de remplissage 18, qui les véhicule à son tour vers la benne 17 de récupération.

Selon un autre mode de réalisation non représenté sur les figures, les tapis de convoyage sont remplacés par des vis sans fin permettant de déplacer les épis du lieu de coupe jusqu'à la benne de récupération.

Le cadre 15 comprend en outre un mécanisme articulé formant un parallélogramme 21 relié audit châssis 10 et comprenant un vérin 22 commandé. La commande du vérin 22 permet de modifier la géométrie du parallélogramme 21. Ce parallélogramme porte un support plan horizontal 23 auquel sont fixés les outils de coupe 14 et les tapis de convoyage 16.

Ainsi, l'actionnement du vérin 22 permet de commander le déplacement en hauteur des outils de coupe et des tapis de convoyage. Ce vérin est de préférence un vérin hydraulique.

Selon le mode de réalisation des figures, et tel que cela apparaît notamment sur la figure 5, le cadre 15 est formé de deux demi-cadre. Chaque demi-cadre est relié au châssis par une liaison pivot de manière à pouvoir être rabattu sur un coté de la machine le long de la direction longitudinale.

Ce mode de réalisation forme donc une articulation configurée pour pouvoir rabattre le cadre de part et d'autre d'un axe de symétrie formé par le tapis de remplissage 18, le long de la direction longitudinale, de manière à pouvoir limiter l'encombrement transversal de la machine lors de déplacements de la machine sur des routes ouvertes à la circulation. Ce mode de réalisation permet donc de déplacer la machine d'une zone d'écimage à une autre zone d'écimage par tout en empruntant les voies normales de circulation.

Selon un mode de réalisation avantageux et tel que représenté sur la figure 1, la machine comprend également deux roues stabilisatrices 51, en contact avec la surface cultivée, agencées au 2/3 de chaque demi-cadre de la machine, et montées chacune sur une tige télescopique à vérin. La tige télescopique de chaque roue stabilisatrice est donc d'une part reliée au cadre de la machine et d'autre part reliée à la roue stabilisatrice. Ainsi, une modification de la longueur de la tige télescopique à vérin par la commande du vérin modifie la distance entre le cadre et la roue stabilisatrice. La présence des roues stabilisatrices 51 montées sur des tiges télescopiques commandées permet de maintenir les outils de coupe à une hauteur constante sur toute la longueur du cadre. En outre, ces moyens concourent à la précision de la coupe, de l'ordre du centimètre. En d'autres termes, les roues stabilisatrices 51 équipées de tiges télescopiques à vérin permettent d'éviter que les extrémités des outils de coupe portées par le cadre ne s'affaissent aux extrémités du fait de l'existence d'un important porte à faux inhérent aux dimensions des outils de coupe et des tapis de convoyage portés par le cadre. Ces roues stabilisatrices forment donc un support réglable en hauteur du cadre au voisinage de ses extrémités.

La machine comprend en outre des moyens de rabattage des épis vers les outils de coupe 14. Ces moyens de rabattage sont montés en avant des outils de coupe, dans le sens d'avancement de la machine agricole.

Ces moyens de rabattage sont formés de brosses 25 hélicoïdales s'étendant le long de la direction transversale et de moteurs d'entrainement en rotation de es brosses 25 hélicoïdales. Ces brosses 25 hélicoïdales sont entrainées en rotation par des moteurs non représentés sur les figures. Ces moteurs sont par exemple des moteurs hydrauliques. Les moyens de rabattage permettent de rabattre les épis vers les outils de coupe 14, ce qui améliore la coupe des épis parasites. Pour ce faire, les brosses hélicoïdales sont mises en rotation dans le sens de rotation des roues de la machine agricole. Ainsi, lors du déplacement de la machine dans le sens d'avancement, les brosses hélicoïdales, qui sont agencées en avant des outils de coupe, rabattent les épis vers l'arrière. Ainsi, ces épis sont mis en contact avec les outils de coupe. En outre, les brosses 25 hélicoïdales délimitent, lorsqu'elles sont mises en rotation, une enceinte de confinement des épis coupés facilitant leur guidage vers les tapis 16 de convoyage.

Ces brosses 25 hélicoïdales sont par exemple formées de poils de 10 à 25 cm de long.

La benne 17 de récupération peut être de tous types. Selon le mode de réalisation des figures, la benne présente une contenance de l'ordre de 4 à 5 m3, ce qui permet de traiter une surface importante d'un champs cultivé avant de devoir vider la benne. La benne 17 de récupération peut en outre être équipée d'un vérin de délestage de la benne permettant de vider la benne dans un véhicule annexe, une fois remplie.

## Revendications

1. Machine agricole de suppression d'épis parasites qui dépassent verticalement d'une espèce végétale cultivée sur une surface (12) de culture comprenant :
- un châssis (10) et des organes (11) de déplacement du châssis dans un sens d'avancement et selon une direction principale d'avancement, dite direction longitudinale, lesdits organes (11) de déplacement présentant des zones de contact avec la surface (12) de culture,
- des outils de coupe (14) s'étendant selon une direction perpendiculaire à la direction longitudinale, dite direction transversale, et montés sur un cadre (15) réglable en hauteur par rapport audit châssis (10) de manière à pouvoir positionner les outils de coupe au niveau des épis parasites à couper,
- une benne (17) de récupération des épis coupés par lesdits outils de coupe (14), ladite benne (17) de récupération étant reliée audit châssis (10),
- des moyens de convoyage (16, 18) des épis coupés portés par ledit cadre (15) réglable en hauteur et s'étendant entre les outils de coupe (14) et ladite benne (17) de récupération des épis coupés, lesdits moyens de convoyage comprenant :
∘ des tapis de convoyage (16) s'étendant le long de la direction transversale, en arrière des outils de coupe (14) dans le sens d'avancement de la machine,
∘ un tapis de remplissage (18) s'étendant le long de la direction longitudinale entre les tapis de convoyage (16) et ladite benne (17) de récupération et formant un axe de symétrie de ladite machine,
∘ des moteurs d'entrainement en rotation desdits tapis de convoyage (16) et dudit tapis de remplissage (18), - ledit cadre (15) réglable en hauteur est monté sur une articulation configurée pour pouvoir rabattre ledit cadre de part et d'autre dudit axe de symétrie formé par ledit tapis de remplissage (18), le long de la direction longitudinale, de manière à pouvoir limiter l'encombrement transversal de la machine lors de déplacements sur des routes ouvertes à la circulation,
et lesdits outils de coupe (14) sont des scies double lames entrainées dans un mouvement de va et vient transversal par des moteurs hydrauliques.

2. Machine selon la revendication 1, **caractérisée en ce qu'**elle comprend en outre des moyens de rabattage (25) des épis vers lesdits outils de coupe (14), lesdits moyens de rabattage (25) étant montés sur ledit cadre (15) réglable en hauteur en étant mobile en rotation autour d'un axe s'étendant le long de ladite direction transversale.

3. Machine selon la revendication 2, **caractérisé en ce que** lesdits moyens de rabattage comprennent en outre des brosses (25) hélicoïdales s'étendant le long de la direction transversale et des moteurs d'entrainement en rotation desdits brosses (25) hélicoïdales.

4. Machine selon l'une des revendications 1 à 3, **caractérisée en ce que** ledit cadre (15) réglable en hauteur comprend :
- un mécanisme articulé formant un parallélogramme (21), relié audit châssis (10) et comprenant au moins un vérin (22) commandé adapté pour pouvoir modifier la géométrie dudit parallélogramme (21),
- un support plan (23) porté par ledit parallélogramme (21) de sorte qu'une déformation du parallélogramme par actionnement dudit vérin (22) commandé assure un déplacement vertical du support plan tout en le maintenant horizontal, ledit support plan (23) portant lesdits outils de coupe (14) et lesdits tapis de convoyage (16).

5. Machine selon l'une des revendications 1 à 4, **caractérisée en ce que** lesdits outils de coupe (14) s'étendent le long de ladite direction longitudinale sur une distance de 12 à 20 mètres.

6. Machine selon l'une des revendications 1 à 5, **caractérisée en ce qu'**elle comprend une cabine de pilotage desdits organes de déplacement dudit châssis et des moyens de commande de la hauteur du cadre agencés dans ladite cabine de pilotage.

## Patentansprüche

1. Landwirtschaftliche Maschine zum Entfernen von parasitären Ähren, die vertikal aus einer Pflanzenart herausragen, die auf einer Anbaufläche (12) angebaut wird, worin die landwirtschaftliche Maschine umfasst:
einen Rahmen (10) und Elemente (11) zum Verschieben des Rahmens in einer Vorschubrichtung und in einer Hauptvorschubrichtung, die als Längsrichtung bezeichnet wird, worin die Verschiebeelemente (11) Bereiche aufweisen, die in Kontakt mit der Kultivierungsfläche (12) stehen,
Schneidwerkzeuge (14), die sich in einer Richtung senkrecht zur Längsrichtung erstrecken, die als Querrichtung bezeichnet wird, und welche an einem relativ zu dem Rahmen (10) höhenverstellbaren Rahmen (15) montiert sind, um die Schneidwerkzeuge auf der Höhe der zu schneidenden Ähren positionieren zu können,
einen Behälter (17) zum Sammeln der von den Schneidwerkzeugen (14) geschnittenen Ähren, worin der Behälter (17) mit dem Rahmen (10) verbunden ist,
Mittel zum Fördern (16, 18) der geschnittenen Ähren, die von dem höhenverstellbaren Rahmen (15) getragen werden und sich zwischen den Schneidwerkzeugen (14) und dem Behälter (17) zum Sammeln der geschnittenen Ähren erstrecken, worin die Fördermittel umfassen:
Förderbänder (16), die sich in Querrichtung hinter den Schneidwerkzeugen (14) in Vorschubrichtung der Maschine erstrecken,
ein Füllband (18), das sich in der Längsrichtung zwischen den Förderbändern (16) und dem Behälter (17) erstreckt und eine Symmetrieachse der Maschine bildet,
Motoren zum Drehen der Förderbänder (16) und des Füllbandes (18),
worin der höhenverstellbare Rahmen (15) auf einem Gelenk montiert ist, das so gestaltet ist, dass der Rahmen auf beiden Seiten der durch das Füllband (18) gebildeten Symmetrieachse in Längsrichtung geklappt werden kann, um die Quermasse der Maschine zu begrenzen, wenn diese auf befahrbaren Straßen fährt, und worin die Schneidwerkzeuge (14) Doppelblattsägen sind, die durch Hydraulikmotoren in einer querverlaufenden Hin-und-Herbewegung angetrieben werden.

2. Maschine nach Anspruch 1, **dadurch gekennzeichnet, dass** sie ferner Mittel (25) zum Falten der Ähren in Richtung der Schneidwerkzeuge (14) umfasst, worin die Faltmittel (25) an dem höhenverstellbaren Rahmen (15) angebracht sind, dadurch dass sie um eine Achse drehbar sind, die sich in der Querrichtung erstreckt.

3. Maschine nach Anspruch 2, **dadurch gekennzeichnet, dass** die Faltmittel ferner schraubenförmige Bürsten (25), die sich in der Querrichtung erstrecken, und Motoren zum Drehen der schraubenförmigen Bürsten (25) umfassen.

4. Maschine nach einem der Ansprüche 1 bis 3, **dadurch gekennzeichnet, dass** der höhenverstellbare Rahmen (15) umfasst:
einen Gelenkmechanismus, der ein Parallelogramm (21) bildet, der mit dem Rahmen (10) verbunden ist und mindestens einen gesteuerten Aktuator (22) umfasst, der geeignet ist, die Geometrie des Parallelogramms (21) zu verändern;
einen ebenen Träger (23), der von dem Parallelogramm (21) getragen wird, so dass eine Verformung des Parallelogramms durch Betätigung des gesteuerten Aktuators (22) eine vertikale Verschiebung des ebenen Trägers gewährleistet, während er horizontal gehalten wird, wobei der ebene Träger (23) die Schneidwerkzeuge (14) und die Förderbänder (16) trägt.

5. Maschine nach einem der Ansprüche 1 bis 4, **dadurch gekennzeichnet, dass** sich die Schneidwerkzeuge (14) in der Längsrichtung über eine Strecke von 12 bis 20 Metern erstrecken.

6. Maschine nach einem der Ansprüche 1 bis 5, **dadurch gekennzeichnet, dass** sie eine Kabine zum Steuern der Elemente zum Verschieben des Rahmens, und Mittel zum Steuern der Höhe des Rahmens umfasst, die in der Steuerkabine angeordnet sind.

## Claims

1. Agricultural machine for removing parasitic ears which protrude vertically from a plant species cultivated on a cultivation surface (12), comprising:
- a framework (10) and members (11) for displacing the framework in a direction of advancement and in a main advancing direction, referred to as the longitudinal direction, said displacement members (11) having regions in contact with the cultivation surface (12),
- cutting tools (14) which extend in a direction perpendicular to the longitudinal direction, referred to as the transverse direction, and which are mounted on a frame (15) that is adjustable in height relative to said framework (10) so as to be able to position the cutting tools at the level of the parasitic ears to be cut,
- a bucket (17) for collecting the ears cut by said cutting tools (14), said collection bucket (17) being connected to said framework (10),
- means for conveying (16, 18) the cut ears, which means are carried by said height-adjustable frame (15) and extend between the cutting tools (14) and said bucket (17) for collecting the cut ears, said conveying means comprising:
∘ conveyor belts (16) which extend in the transverse direction, behind the cutting tools (14) in the direction of advancement of the machine,
∘ a filling belt (18) which extends in the longitudinal direction between the conveyor belts (16) and said collection bucket (17) and forms an axis of symmetry of said machine,
∘ motors for rotating said conveyor belts (16) and said filling belt (18),
- said height-adjustable frame (15) being mounted on an articulation that is designed to be able to fold said frame on either side of said axis of symmetry formed by said filling belt (18), in the longitudinal direction, so as to be able to limit the transverse bulk of the machine when traveling on roads open to traffic, and said cutting tools (14) being double-blade saws driven in a transverse reciprocating movement by hydraulic motors.

2. Machine according to claim 1, **characterized in that** it further comprises means (25) for folding the ears toward said cutting tools (14), said folding means (25) being mounted on said height-adjustable frame (15) by being rotatable about an axis extending in said transverse direction.

3. Machine according to claim 2, **characterized in that** said folding means further comprise helical brushes (25) which extend in the transverse direction and motors for rotating said helical brushes (25).

4. Machine according to any of claims 1 to 3, **characterized in that** said height-adjustable frame (15) comprises:
- an articulated mechanism forming a parallelogram (21) which is connected to said framework (10) and comprises at least one controlled actuator (22) suitable for being able to modify the geometry of said parallelogram (21),
- a planar support (23) carried by said parallelogram (21) so that a deformation of the parallelogram by actuation of said controlled actuator (22) ensures vertical displacement of the planar support while keeping it horizontal, said planar support (23) carrying said cutting tools (14) and said conveyor belts (16).

5. Machine according to any of claims 1 to 4, **characterized in that** said cutting tools (14) extend in said longitudinal direction over a distance of 12 to 20 meters.

6. Machine according to any of claims 1 to 5, **characterized in that** it comprises a cabin for controlling said members for displacing said framework, and means for controlling the height of the frame which are arranged in said control cabin.
